# EUROPÄISCHE PATENTANMELDUNG

(11) **EP 1 090 921 A2**
(43) Veröffentlichungstag der Anmeldung: **11.04.2001**
(21) Anmeldenummer: 00121253.9
(22) Anmeldetag: 04.10.2000
(51) Int. Cl.: C07F 7/04

(54) **Verfahren zur Isolierung von Trimethoxysilan aus einer TMS-Methanol-Mischung**

(30) Priorität: 04.10.1999 DE 19947591
(71) Anmelder: BASF AKTIENGESELLSCHAFT, 67056 Ludwigshafen (DE)
(72) Erfinder: Brand, Alexandra Dr., 64291 Darmstadt (DE); Sterzel, Hans-Josef Dr., 67125 Dannstadt-Schauernheim (DE)
(74) Vertreter: Isenbruck, Günter, Dr.

(57) **Zusammenfassung**

Die Erfindung betrifft ein Extraktionsverfahren zur Isolierung von Trimethoxysilan (TMS) aus einem TMS-Methanol-Gemisch durch Ausbildung von zwei Phasen, einer TMS-reichen Extraktphase und einer Methanol-reichen Raffinatphase, durch Zusatz eines oder mehrerer in Methanol löslicher anorganischer und/oder organischer Salze und gegebenenfalls eines zusätzlichen unpolaren organischen Lösungsmittels und anschließende Phasentrennung, dadurch gekennzeichnet, daß die zuzusetzende Salzmenge so bemessen wird, daß das Gewichtsverhältnis von Trimethoxysilan zu Methanol in der Extraktphase mindestens 94 Gew.-% zu 6 Gew.-% (normiert auf 100 Gew.-%) beträgt. Des weiteren betrifft die Erfindung die Verwendung eines oder mehrerer anorganischer Salze in einem Extraktionsverfahren zur Isolierung von Trimethoxysilan aus einem Trimethoxysilan-Methanol-Gemisch.

## Beschreibung

Die Erfindung betrifft ein Verfahren zur Isolierung von Trimethoxysilan (TMS) aus einem TMS-Methanol-Gemisch.

TMS wird üblicherweise durch Direktsynthese aus Siliziummetall und Methanol hergestellt. Dabei fällt das TMS in Form von TMS-Methanol-Gemischen an. Eine einfache destillative Aufarbeitung dieser Gemische ist aufgrund einer Azeotropbildung der beiden Komponenten TMS und Methanol nicht möglich. Das Azeotrop aus TMS und Methanol wird bei einem Verhältnis von 55 Gew.-% TMS und 45 Gew.-% Methanol gebildet, welches bei 62,5°C siedet, während Methanol einen Siedepunkt von 64,5°C und TMS einen Siedepunkt von 84°C aufweist.

Aus dem Stand der Technik sind Verfahren zur Aufarbeitung von TMS-Methanol-Gemischen bekannt. Darin wird das TMS-Methanol-Gemisch mittels extraktiver Destillation unter Zuhilfenahme von Azeotropbrechern wie n-Hexan, n-Heptan oder allgemein organischen Lösungsmitteln mit einem Dipolmoment < 1,61 D, die mit Methanol ein Azeotrop bilden, getrennt. Nachteilig an diesen Verfahren ist die Azeotropbildung der Azeotropbrecher mit Methanol, da die Rückgewinnung und Wiedereinsetzung der einzelnen Komponenten, Methanol und des Azeotropbrechers, sehr aufwendig und damit unwirtschaftlich ist.

In EP-A 0 310 920 ist ein Verfahren zur Abtrennung von TMS aus einem TMS-Methanol-Gemisch durch extraktive Destillation offenbart. Darin wird hochsiedendes Tetramethoxysilan (TTMS), das unreaktiv ist und mit keiner der beiden Mischungskomponenten ein Azeotrop bildet, als Extraktionslösungsmittel eingesetzt. Die Extraktion erfolgt aufgrund der größeren Affinität des TTMS zu TMS als zu Methanol. Um eine gute Trennleistung zu erreichen, ist jedoch ein 3-10-facher Überschuß TTMS erforderlich, das separat hergestellt werden muß, so daß die Kosten dieses Verfahrens hoch sind.

EP-A 0 462 359 betrifft ein Verfahren zur Aufarbeitung eines TMS-Methanol-Gemisches ohne Zusatz weiterer Substanzen, in dem das erhaltene TMS-Methanol-Azeotrop wieder in den Synthese-Reaktor zur Direktsynthese von TMS aus Siliziummetall und Methanol zurückgeführt wird und lediglich die über das azeotrope Verhältnis von TMS und Methanol hinausgehende Menge TMS isoliert wird.

Alle vorstehend genannten Verfahren haben den Nachteil, daß das TMS-Methanol-Gemisch ohne vorherige Abtrennung des Methanols auf erhöhte Temperaturen gebracht werden muß, wodurch die unerwünschte Folgereaktion von TMS mit Methanol zu Tetramethoxysilan (TTMS) beschleunigt wird und dadurch die Ausbeute an TMS vermindert wird.

JP 60/252488 (vorliegend als Derwent Abstract Nr. 86-031969/05) betrifft die Extraktion von TMS aus einem TMS-Methanol-Gemisch mit organischen Lösungsmitteln und/oder Organopolysiloxanen, die nicht mit der TMS-Methanol-Mischung, aber mit dem TMS mischbar sind. Zum Aussalzen, zur Verbesserung der Extraktionseffektivität, kann ein anorganisches oder organisches Salz zugegeben werden. Die besten in der Extraktphase (=Aufnehmerphase, im wesentlichen Lösungsmittel und Wertstoff, hier TMS) erzielten TMS-Methanol-Verhältnisse betragen 93,7 Gew.-% TMS zu 6,3 Gew.-% Methanol.

Gemäß K. Sattler, 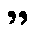 Thermische Trennverfahren", zweite überarbeitete und erweiterte Auflage, VCH-Verlagsgesellschaft mbH, Weinheim, 1995, Seite 498ff, führt die Flüssigphasenextraktion im Gegensatz zu anderen, gegebenenfalls konkurrierenden Trennverfahren wie der Destillation nicht direkt zu den einzelnen, abgetrennten Gemischkomponenten, sondern es ist ein zusätzlicher Trennschritt erforderlich. Die Raffinatphase (= Abgeberphase, die im wesentlichen einen Trägerstoff, hier Methanol, enthält) enthält nämlich neben den Trägerstoff noch Reste an Lösungsmitteln, die gegebenenfalls abgetrennt werden müssen. Die Extraktphase (= Aufnehmerphase, im wesentlichen Lösungsmittel und Wertstoff, hier TMS) besteht im wesentlichen aus Lösungsmittel und Wertstoff und muß daher in einem zusätzlichen Trennschritt in das zur Extraktionsstufe zurückzuführende Lösungsmittel und den Wertstoff zerlegt werden. Dieser höhere Arbeitsaufwand einer Extraktion gegenüber einer Destillation ist nur dann wirtschaftlich, wenn eine sehr gute Auftrennung der Gemischkomponenten erreicht wird, d.h., wenn ein Lösungsmittel mit einer hohen Selektivität eingesetzt wird.

Entscheidend für die Durchführung des Extraktionsverfahrens zur Auftrennung von TMS und Methanol ist daher das Auffinden eines geeigneten Lösungsmittels bzw. einer geeigneten Möglichkeit, um eine hohe Trennleistung zu erreichen. Durch die Wahl eines optimalen Lösungsmittels zur Extraktion kann eine Kostenersparnis und somit eine hohe Wirtschaftlichkeit des Extaktionsverfahrens erreicht werden.

Aufgabe der vorliegenden Erfindung ist daher die Bereitstellung eines wirtschaftlichen Verfahrens zur Isolierung von TMS aus einer TMS-Methanol-Mischung, in dem TMS ohne thermische Belastung des TMS-Methanol-Gemisches in guten Ausbeuten erhalten werden kann.

Die Lösung der Aufgabe geht aus von einem Extraktionsverfahren zur Isolierung von TMS aus einem TMS-Methanol-Gemisch durch Ausbildung von zwei Phasen, einer TMS-reichen Extraktphase und einer Methanol-reichen Raffinatphase, durch Zusatz eines oder mehrerer in Methanol löslicher anorganischer und/oder organischer Salze und gegebenenfalls eines zusätzlichen unpolaren organischen Lösungsmittels und anschließende Phasentrennung.
Das erfindungsgemäße Verfahren ist dadurch gekennzeichnet, daß die zuzusetzende Salzmenge so bemessen wird, daß das Gewichtsverhältnis von TMS zu Methanol in der Extraktphase mindestens 94 Gew.-% (TMS) zu 6 Gew.-% (Methanol) (normiert auf 100 Gew.-%) beträgt.

Durch den Einsatz des optimalen Extraktionsmittels können sehr gute Trennleistungen erreicht werden, wodurch die Gewinnung von TMS in reiner Form in hohen Ausbeuten möglich ist. Mit Hilfe des erfindungsgemäßen Verfahrens ist eine schonende Isolierung des TMS ohne thermische Belastung des TMS-Methanol-Gemisches möglich, so daß die Bildung von Nebenprodukten gering ist.

Unter einem Extraktionsverfahren ist gemäß der vorliegenden Erfindung ein Verfahren zu verstehen, in dem eine Trennung des TMS-Methanol-Gemisches unter Ausbildung von zwei Phasen, einer TMS-reichen Phase (Extraktphase) und einer Methanol-reichen Phase (Raffinatphase), durchgeführt wird. Dabei ist die Zugabe eines unpolaren Lösungsmittels optional.

Je günstiger das Verhältnis von TMS zu Methanol in der Extraktphase ist, desto höher ist die Ausbeute an TMS. Daher beträgt das Verhältnis von TMS zu Methanol bevorzugt ≥ 96 Gew.-% zu ≤ 3 Gew.-%, besonders bevorzugt ≥ 98 Gew.-% zu ≤ 2 Gew.-%.

Die in bezug auf Trennleistung und Wirtschaftlichkeit optimale Salzmenge ist unter anderem abhängig davon, ob zusätzlich unpolares Lösungsmittel zugegeben wird und welches unpolare Lösungsmittel zugegeben wird. Bei der Zugabe von zusätzlichem unpolaren Lösungsmittel beträgt die Salzmenge, bezogen auf die Menge an TMS und Methanol, bevorzugt mindestens 0,5 Gew.-%, besonders bevorzugt 0,5 bis < 10 Gew.-%, ganz besonders bevorzugt 7 bis < 10 Gew.-%.

Das gegebenenfalls eingesetzte unpolare Lösungsmittel dient gemeinsam mit dem eingesetzen Salz als Phasenbildner zur Ausbildung von zwei Phasen, der Extraktphase, die im wesentlichen TMS und das unpolare Lösungsmittel enthält, und der Raffinatphase, die im wesentlichen Methanol und Salz enthält.

Als unpolare Lösungsmittel, die optional eingesetzt werden können, werden bevorzugt unpolare Lösungsmittel eingesetzt, die nicht mit der TMS-Methanol-Mischung, jedoch mit TMS mischbar sind. Geeignete Lösungsmittel sind vorzugsweise ausgewählt aus verzweigten und unverzweigten C₈-C₁₆-Alkanen und Gemischen davon, Fluorkohlenwasserstoffen, Diphenylalkanen, Dialkylbenzolen und linearen Alkylbenzolen. Besonders bevorzugt sind Dodekan und C₁₂₋₁₄-Alkangemische.

Der Zusatz des unpolaren Lösungsmittels erfolgt in einem Verhältnis von unpolarem Lösungsmittel zu TMS und Methanol von im allgemeinen 10 bis 0,5 zu 1, bevorzugt von 5 bis 1 zu 1. In einer ganz besonders bevorzugten Ausführungsform des erfindungsgemäßen Verfahrens wird kein unpolares Lösungsmittel als Extraktionsmittel zugegeben.

Diese Ausführungsform hat den Vorteil, daß nur wenige Komponenten an der Isolierung des TMS aus dem TMS-Methanol-Gemisch beteiligt sind. Eine im Anschluß an das Extraktionsverfahren erfolgende destillative Produktreinigung, bei der üblicherweise zur Abtrennung des unpolaren Lösungsmittels große Mengen davon erwärmt werden müssen, was mit einem hohen Energieaufwand verbunden ist, erfordert in dieser erfindungsgemäßen Ausführungsform einen wesentlich geringeren Energieaufwand, da kein unpolares Lösungsmittel abgetrennt werden muß. Des weiteren wird eine Verunreinigung des TMS durch Lösungsmittelreste verhindert.

In dem erfindungsgemäßen Verfahren können sowohl organische als auch anorganische Salze eingesetzt werden. Geeignete anorganische Salze sind beispielsweise Halogenide, Perchlorate, Tetrafluoroborate, Sulfate, Nitrate, und als organische Salze sind Acetate und Carboxylate geeignet. Als Kationen können Kationen der Metalle der Gruppen 1 und 2 des Periodensystems der Elemente sowie von Eisen (in seiner 2- und 3-wertigen Form als Salz) und Zink sowie das Ammoniumion eingesetzt werden. Bevorzugt werden ein oder mehrere Salze ausgewählt aus Halogeniden, Perchloraten, Tetrafluoroboraten, Acetaten und Carboxylaten von Metallen der Gruppen 1 und 2 des Periodensystems der Elemente, des Eisens (in seiner 2- oder 3-wertigen Form als Salz), Zinks und des Ammoniumions eingesetzt. Besonders bevorzugt sind Natriumchlorid, Lithiumchlorid, Calziumchlorid, Eisen(II)chlorird und Zink(II)chlorid. Ganz besonders bevorzugt ist Lithiumchlorid, das preisgünstig ist und zu sehr guten Phasentrennungen führt. Ferner besitzt Lithiumchlorid von allen besonders bevorzugten Salzen die größte Löslichkeit in Methanol.

Das erfindungsgemäße Extraktionsverfahren kann ein- oder mehrstufig durchgeführt werden. Es können beispielsweise folgende Varianten angewandt werden:
(a) einstufige Extraktion, auch differentiell absatzweise mit rezirkuliertem Lösungsmittel,
(b) mehrstufige Extraktion im Phasenkreuzstrom,
(c) mehrstufige Extraktion im Phasengegenstrom,
(d) mehrstufige Extraktion im Phasengegenstrom mit Extraktrücklauf.

(a)Bei der einstufigen Extraktion wird das zu behandelnde Gemisch aus Methanol und TMS einmalig unter Zugabe des Salzes und gegebenenfalls mit dem gesamten Lösungsmittel in der Mischzone einer Extraktionseinrichtung intensiv vermischt. Nach angenäherter oder vollständiger Einstellung des Verteilungsgleichgewichts in der Abscheidezone der Extraktionseinrichtung verlassen Extrakt- und Raffinatphase die Abscheidezone der Extraktionseinrichtung. Die Extraktphase besteht im wesentlichen aus TMS und gegebenenfalls Lösungsmittel, enthält aber auch noch Methanolreste. Die Raffinatphase setzt sich aus Methanol und gegebenenfalls Resten von Lösungsmitteln und TMS sowie dem eingesetzten Salz zusammen. Bei der differentiellen absatzweisen Extraktion werden das Gemisch mit dem Salz und gegebenenfalls Lösungsmittel in einem Behälter zunächst gut vermischt. Nach erfolgter Extraktion fallen eine Raffinatphase und Extraktphase an, die stetig abgezogen wird. Das gegebenenfalls eingesetzte, in der Extraktphase vorliegende Lösungsmittel wird stetig zurückgeführt und bewirkt so eine bessere Extraktion des TMS aus der Mischung.
(b) Die mehrstufige Extraktion im Kreuzstrom von Raffinatphase (Abgeberphase) und Extraktphase (Aufnehmerphase) kann stetig oder absatzweise durchgeführt werden. Bei der stetigen Kreuzstromextraktion fließt die TMS-Methanol-Mischung einer ersten Stufe zu, wo sie mit Salz und gegebenenfalls Lösungsmittel behandelt wird. Die dabei erfolgende Extraktion führt zu einem Raffinatstrom und einen Extraktstrom. Die Raffinatphase wird von Stufe zu Stufe weitergeleitet und mit jeweils frischer bzw. regenerierter Extraktphase versetzt, während die Extraktphase in jeder Stufe entnommen und meist zusammengefaßt aufgearbeitet wird. Bei der absatzweisen Extraktion kann das gleiche Verfahren in einer Extraktionsvorrichtung mit Rührwerk durchgeführt werden. Aus einer örtlichen Serie von Extraktionsstufen wird jetzt eine zeitliche Abfolge von Misch- und damit Extrakionsvorgängen und Absetzphasen mit Abzug der jeweiligen Extraktphase und jeweiligem Zumischen von frischer Aufnehmerphase zu den verbleibenden Raffinatphasen.
(c) Bei der Gegenstromextraktion werden das zu behandelnde TMS-Methanol-Gemisch bzw. die Raffinatphase (Abgeberphase) und die Extraktphase (Aufnehmerphase) im Gegenstrom durch mehrere in Serie geschaltete Extraktionsgefäße (Mixer-Settler) oder durch Extraktionskolonnen geleitet. Das Gemisch und die Extraktphase (Aufnehmerphase) strömen dabei dem Mehrstufenextraktor an seinen entgegengesetzten Enden zu, so daß der Raffinatstrom, gegebenenfalls mit frischem Lösungsmittel, und der Extraktstrom mit der zu behandelnden Zulaufmischung (TMS-Methanol-Gemisch) in Berührung sind. Dies führt zu hohen Konzentrationsdifferenzen für die Übergangskomponente (TMS) zwischen den ein- und austretenden Phasen und damit zu einer guten Anreicherung der Übergangskomponente in der Extraktphase und zu einer weitgehenden Restentfernung aus der Raffinatphase.
(d) Die bei der Gegenstromextraktion erzielbare Konzentration des TMS in der den Extraktor verlassenden Extraktphase kann durch Rückführung von aufbereiteter Extraktphase in die Kolonne noch gesteigert werden. Dies geschieht bei der Gegenstromextraktion mit Extraktrücklauf.

Bevorzugt wird das erfindungsgemäße Extraktionsverfahren mehrstufig im Phasenkreuzstrom (b) oder im Phasengegenstrom mit Rückführung der Extraktphase (d) durchgeführt.

Für das Extraktionsverfahren geeignete Vorrichtungen sind beispielsweise Kolonnen mit Einbauten wie Füllkörpern, Packungen, Siebböden und Rührzellen, um durch eine möglichst hohe Phasenturbulenz und große Stoffaustauschfläche einen guten Austausch von Übergangskomponente (TMS) zwischen den Phasen zu erreichen.

Geeignete Extraktionsapparaturen sind beispielsweise:
- statische Kolonnen (Füllkörperkolonne, Siebbodenkolonne, Packungskolonne),
- pulsierte Kolonnen (Füllkörperkolonne, Siebbodenkolonne, Karr-Kolonne),
- gerührte Kolonnen (Rotating Disk Contactor (RDC), Asymmetric Rotating Disk Contactor (ARD), QVF-Rührzellenextraktor, Kühni-Extraktor, etc.),
- Mischer-Abscheider bzw. eine Mischer-Abscheider-Batterie und Turm-Mixer-Settler.

Bevorzugt sind Extraktionsapparaturen, die eine geringe Anfälligkeit für Verkrustungen durch Salze zeigen, d. h. Kolonnen mit Energieeintrag, wie pulsierte Kolonnen, insbesondere pulsierte Füllkörperkolonnen und gerührte Kolonnen.

Weitere Angaben zu Flüssig-Flüssig-Extraktionsverfahren sowie zu Extraktionsapparaturen sind beispielsweise K. Sattler 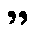 Thermische Trennverfahren", zweite überarbeitete und erweiterte Auflage, VCH Verlagsgesellschaft mbH, Weinheim, 1995, Seiten 507 - 566, zu entnehmen.

Das erfindungsgemmäße Verfahren wird im allgemeinen bei einer Temperatur von ≤ 65°C durchgeführt, bevorzugt bei Temperaturen von -40 bis +60°C, besonders bevorzugt von - 20 bis +40°C. Die Extraktion kann im allgemeinen bei jedem beliebigen Druck durchgeführt werden. Üblicherweise wird sie bei Normaldruck durchgeführt.

Ein weiterer Gegenstand der vorliegenden Erfindung ist die Verwendung eines oder mehrerer anorganischer oder organischer Salze in einem Extraktionsverfahren zu Isolierung von TMS aus einem TMS-Methanol-Gemisch gemäß dem erfindungsgemäßen Verfahren.

Die nachfolgenden Beispiele erläutern die Erfindung zusätzlich.

### Beispiele

### Beispiel V1 (Vergleichsbeispiel, ohne Salz)

Eine Mischung aus 20 g Trimethoxysilan und 15,2 g Methanol wird mit 176 g Dodekan in einem Schütteltrichter bei Raumtemperatur extrahiert. Die Mischung wird dazu 50mal kurz geschüttelt. Nach drei Minuten wird der Vorgang wiederholt. Die Zusammensetzungen der Lösungsmittelphase und des Raffinats werden mittels Gaschromotographie analysiert. Tabelle 1 faßt die relevanten Verteilungs (K)- und Extraktionskoeffizienten (E) zusammen.

**Tabelle 1**

| Phase | Gewicht | | Gew.-% | | | |
|---|---|---|---|---|---|---|
| | [g] | ohne Salz | MeOH | TMS | TTMS | Dodekan |
| obere | 196,4 | | 2,87 | 7,96 | 0,31 | 88,86 |
| untere | 13,3 | 13,3 | 51,32 | 21,49 | 5,22 | 21,87 |

Gewichtsverhältnis von TMS zu MeOH in der Extraktphase, normiert auf 100 Gew.-%: 73,5 Gew.-% zu 26,5 Gew.-%.

### Beispiel 2 (mit Lösungsmittel)

Eine Mischung aus 20 g Trimethoxysilan, 15,2 g Methanol und 3 g Lithiumchlorid werden mit 35,2 g Dodekan in einem Schütteltrichter bei Raumtemperatur extrahiert. Die Mischung wird dazu 50mal kurz geschüttelt. Nach drei Minuten wird der Vorgang wiederholt. Die Zusammensetzungen der Lösungsmittelphase und des Raffinats werden mittels Gaschromotographie analysiert. Die beiden Phasen werden zur Gehaltsbestimmung von Lithiumchlorid am Rotationsverdampfer eingedampft. Lithiumchlorid befindet sich quantitativ in der methanolischen Phase. Tabelle 2 faßt die relevanten Verteilungs (K)- und Extraktionskoeffizienten (E) zusammen.

**Tabelle 2**

| Phase | Gewicht | | Gew.-% | | | |
|---|---|---|---|---|---|---|
| | [g] | ohne Salz | MeOH | TMS | TTMS | Dodekan |
| obere | 57,4 | | 0,01 | 30,92 | 6,75 | 62,32 |
| untere | 17,3 | 14,3 | 70,3 | 17,94 | 10,95 | 0,80 |

Gewichtsverhältnis von TMS zu MeOH in der Extraktphase, normiert auf 100 Gew.-%: 99,97 Gew.-% zu 0,03 Gew.-%.

### Beispiel 3 (ohne Lösungsmittel)

Eine Mischung von 20 g Trimethylsilan (96,4 %), 15,2 g Methanol und 4,1 Lithiumchlorid wird in einem Schütteltrichter bei Raumtemperatur gemischt. Die Mischung wird 50mal kurz geschüttelt. Nach drei Minuten wird der Vorgang wiederholt. Es findet eine Phasentrennung nach ca. einer Minute statt. Die Zusammensetzungen der Trimethylsilanphase und der Methanolphase werden mittel Gaschromotographie analysiert. Die beiden Phasen werden zur Bestimmung von Lithiumchlorid am Rotationsverdampfer eingedampft. Lithiumchlorid befindet sich quantitativ in der methanolischen Phase. Tabelle 3 faßt die Ergebnisse zusammen.

**Tabelle 3**

| Phase | Gewicht | | Norm % | | Gehalt [g] | | | |
|---|---|---|---|---|---|---|---|---|
| | [g] | ohne Salz | MeOH | TMS | TTMS | MeOH | TMS | TTMS |
| obere | 14,3 | 14,3 | 2,55 | 95,1 | 2,36 | 0,36 | 13,6 | 0,34 |
| untere | 24,2 | 20,1 | 79,72 | 15,26 | 5,01 | 16,02 | 3,07 | 1,01 |

Gewichtsverhältnis von TMS zu MeOH in der Extraktphase, normiert auf 100 Gew.-%: 97,4 Gew.-% zu 2,6 Gew.-%.

## Patentansprüche

1. Extraktionsverfahren zur Isolierung von Trimethoxysilan (TMS) aus einem TMS-Methanol-Gemisch durch Ausbildung von zwei Phasen, einer TMS-reichen Extraktphase und einer Methanol-reichen Raffinatphase, durch Zusatz eines oder mehrerer in Methanol löslicher anorganischer und/oder organischer Salze und gegebenenfalls eines zusätzlichen unpolaren organischen Lösungsmittels und anschließende Phasentrennung, dadurch gekennzeichnet, daß die zuzusetzende Salzmenge so bemessen wird, daß das Gewichtsverhältnis von Trimethoxysilan zu Methanol in der Extraktphase mindestens 94 Gew.-% zu 6 Gew.-% (normiert auf 100 Gew.-%) beträgt.

2. Verfahren nach Anspruch 1, dadurch gekennzeichnet, daß unpolare Lösungsmittel ausgewählt aus verzweigten und unverzweigten C₈- bis C_{?}-Alkanen, Fluorkohlenwasserstoffen, Diphenylalkanen, Dialkylbenzolen und lineare Alkylbenzole zugesetzt werden.

3. Verfahren nach Anspruch 1, dadurch gekennzeichnet, daß kein zusätzliches unpolares Lösungsmittel zugesetzt wird.

4. Verfahren nach einem der Ansprüche 1 bis 3, dadurch gekennzeichnet, daß ein oder mehrere Salze ausgewählt aus Halogeniden, Perchloraten, Tetrafluoroboraten, Acetaten und Carboxylaten von Metallen der Gruppen 1 und 2 des Periodensystems der Elemente, Eisen (in seiner 2- oder 3-wertigen Form des Salzes), Zink und dem Ammoniumion zugesetzt werden.

5. Verfahren nach Anspruch 4, dadurch gekennzeichnet, daß Lithiumchlorid zugesetzt wird.

6. Verfahren nach einem der Ansprüche 1 bis 5, dadurch gekennzeichnet, daß das Extraktionsverfahren mehrstufig oder kontinuierlich durchgeführt wird.

7. Verfahren nach einem der Ansprüche 1 bis 6, dadurch gekennzeichnet, daß das Extraktionsverfahren als mehrstufige Extraktion im Phasenkreuzstrom oder als mehrstufige Extraktion im Phasengegenstrom durchgeführt wird.

8. Verfahren nach einem der Ansprüche 1 bis 7, dadurch gekennzeichnet, daß die Temperatur ≤ 65°C beträgt.

9. Verwendung eines oder mehrerer anorganischer oder organischer Salze in einem Extraktionsverfahren zur Isolierung von Trimethoxysilan aus einem Trimethoxysilan-Methanol-Gemisch gemäß Anspruch 1.
